# FASCICULE DE BREVET EUROPEEN

(11) **EP 2 577 772 B1**
(45) Date de publication et mention de la délivrance du brevet: **26.10.2016**
(21) Numéro de dépôt: 11727268.2
(22) Date de dépôt: 25.05.2011
(51) Int. Cl.: H01M 2/16, H01M 10/42, H01M 10/0525

(54) **BATTERIE AU LITHIUM PROTEGEE CONTRE L'INTRUSION D'ELEMENTS POINTUS**
LITHIUMBATTERIE MIT SCHUTZ VOR EINDRINGUNG DURCH SPITZE ELEMENTE
LITHIUM BATTERY PROTECTED FROM INSTRUSION BY POINTED ELEMENTS

(30) Priorité: 27.05.2010 FR 1054057
(43) Date de publication de la demande: 10.04.2013
(73) Titulaire: Blue Solutions, 29500 Ergué Gabéric (FR)
(72) Inventeur: DESCHAMPS, Marc, F-29000 Quimper (FR)
(74) Mandataire: Goulard, Sophie
(86) Numéro de dépôt international: PCT/FR2011/051190
(87) Numéro de publication internationale: WO 2011/148100

(56) Documents cités:
- US-A1- 2008 241 674
- US-A1- 2009 208 838

## Description

La présente invention concerne une batterie qui fonctionne par circulation réversible d'ions lithium entre les électrodes à travers l'électrolyte, ladite batterie ayant une sécurité de fonctionnement améliorée.

Une batterie fonctionnant par circulation d'ions lithium comprend au moins une électrode négative et au moins une électrode positive séparée par un électrolyte. Dans ladite batterie, l'électrolyte comprend un sel de lithium en solution dans un solvant solvatant liquide, un solvant solide polymère ou un solvant gel dans lequel le sel est aisément dissociable ; l'électrode positive est constituée par un collecteur de courant supportant un matériau d'électrode qui contient au moins une matière active d'électrode positive capable d'insérer des ions lithium de manière réversible ; l'électrode négative est constituée par une feuille de lithium métallique (éventuellement supportée par un collecteur de courant), d'un alliage de lithium ou d'un composé intermétallique de lithium (batterie au lithium), ou par un collecteur de courant supportant un matériau d'électrode qui contient au moins une matière active d'électrode négative capable d'insérer des ions lithium de manière réversible (batterie aux ions lithium).

Les batteries au lithium ou aux ions lithium peuvent être constituées par un très grand nombre de batteries élémentaires, chacune des batteries élémentaires étant constituée par un film d'électrode négative, un film d'électrolyte et un film d'électrode positive, lesdits films ayant en général une épaisseur entre 10 et 100 µm. Ces batteries sont généralement élaborées en assemblant un certain nombre de batteries élémentaires en parallèles en reliant entre elles les électrodes positives pour forme un pôle positif, et les électrodes négatives pour former un pôle négatif, puis en assemblant en série, les groupes de batteries élémentaires assemblées en parallèle, en reliant le pôle d'un groupe au pôle de signe opposé d'un autre groupe. A titre d'exemple, on peut envisager d'assembler quelques centaines de groupes comprenant chacun jusqu'à une centaine de batteries élémentaires.

En raison de leur constitution sous forme de films minces, ces batteries sont sensibles à l'écrasement ou à la pénétration d'éléments pointus. Lors d'un écrasement ou de la pénétration d'un élément pointu, il peut se produire un court-circuit par contact direct entre les collecteurs de courant, ou entre un collecteur de courant et l'élément pénétrant s'il est conducteur. Le court-circuit peut provoquer un incendie.

Le document US2008/241674 A décrit un assemblage élémentaire PEN, pour une batterie du type "lithium-ion", ayant une couche de caoutchouc en contact avec au moins une des électrodes; l'assemblage PEN est enroulée pour former une batterie.

Le document JP2000/021386 A décrit un assemblage PEN utilisant un film de protection avec un allongement élevé.

Le but de la présente invention est de fournir une batterie dont la sécurité de fonctionnement lors d'un écrasement ou de la pénétration d'éléments pointus est améliorée, en empêchant que, lors d'un écrasement de la batterie, deux électrodes successives de signe opposé soient en contact, et que, lors de la pénétration d'un élément métallique dans l'une des faces de la batterie, ledit élément métallique soit en contact avec deux électrodes successives de signe opposé. Ce but est atteint par l'apposition de films élastiques sur au moins certaines électrodes.

Une batterie selon l'invention est constituée par une batterie élémentaire PEN qui comprend un film d'un électrolyte E contenant un sel de lithium entre un film P formant une électrode positive et un film N formant une électrode négative, ou par un empilement de batteries élémentaires PEN comprenant deux batteries élémentaires terminales entre lesquelles sont éventuellement placées une ou plusieurs batteries élémentaires intermédiaires. Ladite batterie est caractérisée en ce qu'elle comprend au moins deux films protecteurs Fp constitués par un matériau élastique, au moins l'une des électrodes de la batterie élémentaire ou de chaque batterie terminale étant en contact avec un film protecteur Fp constitué par un matériau élastique.

En particulier, la batterie comprend au moins deux films protecteurs Fp constitués par un matériau élastique ayant un allongement à la rupture désigné par aₘₑ et une épaisseur désignée par eₘₑ, au moins l'un desdits films protecteurs Fp est en contact avec une couche de connexion d'une électrode ayant une épaisseur eₘₐₓ, ledit film ayant une épaisseur eₘₑ telle que eₘₑ > eₘₐₓ/aₘₑ.

Ainsi, lors de la pénétration d'un élément pointu par l'une quelconque des faces de la batterie, l'étirement du film protecteur par l'élément pénétrant empêche le contact entre l'élément pénétrant et les électrodes.

Au sens de la présente invention, on entend par « électrode positive » et « électrode négative », l'ensemble formé par une couche d'électrode et un collecteur de courant lorsque la batterie comprend un tel collecteur. La couche de connexion est la couche de l'électrode qui assure la connexion de l'électrode avec un circuit électrique externe. Ainsi, lorsqu'il est indiqué que le film protecteur est en contact avec une couche de connexion d'une électrode, cela sous-entend que le film protecteur est en contact avec la couche d'électrode elle-même, lorsque l'électrode est dépourvue de collecteur de courant, notamment lorsque cette couche est réalisée en un film métallique, ou au collecteur de courant, lorsque l'électrode comprend un tel collecteur.

Dans une batterie selon l'invention comprenant une seule batterie élémentaire P E N, au moins l'une des faces de chaque électrode est en contact avec ledit film protecteur Fp.

Dans le présent texte, "batterie terminale" désigne une batterie élémentaire située sur la face extérieure d'une batterie constituée par un empilement de plusieurs batteries élémentaires, et "batterie intermédiaire" désigne une batterie élémentaire qui n'est pas une batterie terminale dans l'empilement. "Electrode terminale" désigne une électrode située sur la face extérieure d'une batterie terminale. Les deux électrodes d'une batterie constituée par une seule batterie élémentaire sont considérées comme des électrodes terminales. "Face extérieure" d'une électrode terminale désigne la face de ladite électrode qui est à l'opposé de celle qui est en regard d'un film d'électrolyte.

Un film formant une électrode ou un électrolyte dans une batterie selon l'invention a généralement une épaisseur variant de 10 µm et à 100 µm. Lorsque l'électrolyte est un électrolyte liquide, il imprègne un séparateur placé entre une électrode négative et une électrode positive.

Selon une forme de réalisation préférée de l'invention, l'électrolyte est un électrolyte solide.

Dans une batterie selon l'invention, le nombre de batteries élémentaires peut être très élevé. Les batteries élémentaires sont généralement assemblées en parallèle, puis les groupes de batteries assemblées en parallèle sont assemblés en série. Dans un assemblage en parallèle, chaque électrode d'une batterie élémentaire est reliée à l'électrode de même signe d'une batterie élémentaire adjacente. Dans un assemblage en série, chaque électrode d'une batterie élémentaire (ou d'un groupe de batteries élémentaires reliées en parallèle) est reliée à l'électrode de signe opposé d'une batterie élémentaire adjacente (ou d'un groupe de batteries élémentaires reliées en parallèle). Une batterie selon l'invention est de préférence sous la forme d'un assemblage en série de quelques centaines de groupes comprenant chacun jusqu'à une centaine de batteries élémentaires montées en parallèle. On peut ainsi envisager 1 à 500 groupes constitués chacun par 1 à 200 batteries élémentaires, plus particulièrement de 10 à 400 groupes constitués chacun par 5 à 150 batteries élémentaires.

Dans une batterie selon l'invention, une électrode positive est constituée par un collecteur de courant portant un film de matière active d'électrode positive capable d'insérer des ions lithium de manière réversible. Dans une batterie dite « au lithium », une électrode négative est constituée par un film d'un matériau métallique choisi parmi le lithium, les alliages de lithium et les composés intermétalliques de lithium. Dans une batterie dite « lithium-ion » l'électrode négative est constituée par un collecteur de courant portant un film de matière active d'électrode négative capable d'insérer des ions lithium de manière réversible.

Lorsqu'une électrode est constituée par un collecteur de courant portant une matière active, le film protecteur est placé entre le collecteur de courant et le film de matière active. Dans le cas d'anode constituée par un film métallique (lithium, alliage de lithium, composé intermétallique de lithium), le film protecteur est appliqué sur ledit film métallique.

Dans une configuration particulièrement préférée d'une batterie constituée par un empilement de multiples batteries élémentaires PEN, les batteries élémentaires sont empilées de telle sorte que :
- les électrodes positives de deux batteries élémentaires adjacentes sont réunies en une seule et formées par un collecteur de courant unique portant un film de matière active d'électrode positive sur chacune de ses faces ;
- les électrodes négatives de deux batteries élémentaires adjacentes sont réunies en une seule et formées soit par un collecteur de courant unique portant un film de matière active d'électrode négative sur chacune de ses faces ; soit par un film d'un matériau métallique choisi parmi le lithium, les alliages de lithium et les composés intermétalliques de lithium ;
- une électrode terminale positive est constituée par un collecteur de courant portant une matière active d'électrode positive sur l'une de ses faces ;
- une électrode terminale négative est constituée soit par un collecteur de courant portant une matière active d'électrode négative sur l'une de ses faces, soit par un film d'un matériau métallique choisi parmi le lithium, les alliages de lithium et les composés intermétalliques de lithium.

Lorsqu'une batterie selon l'invention comprend uniquement des films protecteurs Fₚ sur l'une des faces de chacune des électrodes terminales, le matériau élastique formant les films protecteurs a préférentiellement un allongement à la rupture aₘₑ et une épaisseur eₘₑ tels que eₘₑ ≥e_{max-Tot}/aₘₑ, e_{max-Tot} étant l'épaisseur des batteries élémentaires entre lesdits films protecteurs Fp.

Lorsqu'une batterie selon l'invention comprend de multiples batteries élémentaires, l'interposition de plusieurs films protecteurs dans les batteries élémentaires intermédiaires permet l'utilisation d'un matériau dont l'élasticité peut être plus faible que dans le cas où la batterie comprend uniquement un film protecteur sur chacune des deux électrodes terminales. Ce résultat peut être obtenu selon plusieurs variantes.

Une première variante de protection d'une batterie, dite variante minimale, vise à empêcher le contact entre des électrodes de signe opposé, directement ou par l'intermédiaire d'un élément pointu pénétrant.

Une seconde variante de protection d'une batterie, dite variante optimale, vise à empêcher le contact entre toutes les électrodes, directement ou par l'intérmédiaire d'un élément pointu pénétrant.

Dans une batterie aux ions lithium, le but est d'empêcher le contact entre un élément pénétrant et les collecteurs de courant des électrodes.

La variante minimale de protection dans une batterie aux ions lithium peut être mise en oeuvre selon deux modes de réalisation.

Dans un 1^{er} mode de réalisation, on place un film protecteur sur chaque face du collecteur de courant de chaque électrode d'un signe donné, par exemple sur chaque face des collecteurs de courant des électrodes positives lorsque les électrodes terminales sont des électrodes positives, en choisissant un matériau et une épaisseur de film tels que eₘₑ ≥eₘₐₓ/aₘₑ, eₘₐₓ étant au moins égal à l'épaisseur d'un collecteur de courant. Lors de la pénétration d'un élément pointu conducteur par l'une quelconque des faces de la batterie, l'élément conducteur étire chaque film protecteur de manière à masquer la tranche du film formant le collecteur de courant placé en aval du film protecteur, "aval" s'entendant par rapport au sens de pénétration d'un élément pointu conducteur. L'élément pénétrant est ainsi isolé des collecteurs de courant positif, de sorte qu'il ne forme pas une connection entre des collecteurs de signe opposé. Bien entendu, le résultat sera analogue si les électrodes terminales étaient des électrodes négatives, les films protecteurs étant alors apposés sur les collecteurs de courant des électrodes négatives.

Dans un 2^{ème} mode de réalisation, on place un film protecteur sur la face en amont des collecteurs de courant positif, et sur la face en aval des collecteurs de courant négatifs, "amont" et "aval" s'entendant par rapport au sens de pénétration d'un élément pointu conducteur, en choisissant un matériau et une épaisseur de film tels que eₘₑ ≥eₘₐₓ/aₘₑ, eₘₐₓ étant au moins égal à l'épaisseur d'un collecteur de courant. Lorsqu'un élément pénètre par la face en amont des collecteurs de courant positif, il étire le film protecteur de ces collecteurs de courant de manière à masquer la tranche des collecteurs de courant positifs en aval du film protecteur, et il étire le film protecteur associé aux collecteurs de courant négatifs. Lorsqu'un élément pénètre par la face opposée de la batterie, il étire le film protecteur des collecteurs de courant négatifs de manière à masquer la tranche des collecteurs de courant négatifs en aval des films protecteurs, et il étire en outre les films associés aux collecteurs positifs.

La variante optimale dans une batterie aux ions lithium peut être mise en oeuvre selon divers modes de réalisation.

Dans un 1^{er} mode de réalisation, on appose un film protecteur sur au moins l'une des faces du collecteur de courant de chaque électrode terminale, en choisissant un matériau et une épaisseur de film tels que eₘₑ ≥e_{max-Tot}/aₘₑ, e_{max-Tot} étant au moins égal à l'épaisseur de l'ensemble des batteries élémentaires superposées.

Dans un 2^{ème} mode de réalisation, on place un film protecteur sur chaque face du collecteur de courant de chaque électrode d'un signe donné, par exemple sur chaque face des collecteurs de courant des électrodes positives, en choisissant un matériau et une épaisseur de film tels que eₘₑ ≥ e_{max-Tot} /aₘₑ, /aₘₑ, e_{max-Tot} étant au moins égal à l'épaisseur d'une batterie élémentaire. Lors de la pénétration d'un élément pointu conducteur par l'une quelconque des faces de la batterie, l'élément conducteur étire chaque film protecteur de manière à masquer la tranche des films formant une batterie élémentaire, incluant la tranche des deux collecteurs de courant de signe opposé successifs. L'élément pénétrant est ainsi isolé de tous les collecteurs de courant. Bien entendu, le résultat sera analogue si les films protecteurs étaient apposés sur les collecteurs de courant des électrodes négatives.

Dans un 3^{ème} mode de réalisation, on place un film protecteur sur la face en amont des collecteurs de courant positif, et sur la face en aval des collecteurs de courant négatifs, "amont" et "aval" s'entendant par rapport au sens de pénétration d'un élément pointu conducteur, en choisissant un matériau et une épaisseur de film tels que eₘₑ ≥ e_{max-Tot} /aₘₑ, e_{max-Tot} étant au moins égal à l'épaisseur d'une batterie élémentaire. Lorsqu'un élément pointu pénètre par la face en amont des collecteurs de courant positif, il étire le film protecteur de ces collecteurs de courant de manière à masquer la tranche des films formant une batterie élémentaire, incluant la tranche des deux collecteurs de courant de signe opposé successifs, et il étire le film protecteur associé aux collecteurs de courant négatifs. Lorsqu'un élément pénètre par la face opposée de la batterie, il étire le film protecteur des collecteurs de courant négatifs de manière à masquer la tranche des films formant une batterie élémentaire, incluant la tranche des deux collecteurs de courant de signe opposé successifs, et il étire en outre les films associés aux collecteurs positifs.

Dans une batterie au lithium, le but est d'empêcher le contact entre un élément pénétrant, le collecteur de courant des électrodes positives et le film métallique formant les électrodes négatives. Lors de la pénétration d'un élément pointu, le matériau métallique formant une électrode négative peut fluer de manière plus ou moins importante suivant son degré de ductilité. Le fluage sera plus important pour un film de lithium que pour un film d'un alliage de lithium.

Dans la variante minimale de protection d'une batterie au lithium, les films protecteurs ont pour but d'empêcher le contact entre un élément pénétrant conducteur et les collecteurs de courant des électrodes positives et les films métalliques (lithium, alliage de lithium, composé intermétallique de lithium) formant les électrodes négatives, en tenant compte du fluage éventuel de ces films métalliques lors de la pénétration d'un élément pointu. Cette variante peut être mise en oeuvre selon divers modes de réalisation.

Dans un 1^{er} mode de réalisation, on place un film protecteur sur chaque face du collecteur de courant de chaque électrode positive, en choisissant un matériau et une épaisseur de film tels que eₘₑ ≥eₘₐₓ/aₘₑ, eₘₐₓ étant au moins égal à l'épaisseur d'un collecteur de courant de l'électrode positive. Lors de la pénétration d'un élément pointu conducteur par l'une quelconque des faces de la batterie, l'élément conducteur étire chaque film protecteur de manière à masquer la tranche du film formant le collecteur de courant positif placé après le film protecteur. L'élément pénétrant est ainsi isolé des collecteurs de courant positif, de sorte qu'il ne forme pas un connection entre des collecteurs de signe opposé.

Dans un 2^{ème} mode de réalisation, on place un film protecteur sur chaque face de chaque électrode négative, en choisissant un matériau et une épaisseur de film tels que eₘₑ ≥eₘₐₓ/aₘₑ, eₘₐₓ étant au moins égal à l'épaisseur de l'électrode négative en tenant compte du fluage éventuel du matériau formant cette électrode négative, ou à l'épaisseur de l'électrolyte et de l'électrode positive placés après le film protecteur.

Dans un 3^{ème} mode de réalisation, on place un film protecteur sur la face en amont des collecteurs de courant positif, et sur la face en aval des électrodes négatives, "amont" et "aval" s'entendant par rapport au sens de pénétration d'un élément pointu conducteur, en choisissant un matériau et une épaisseur de film tels que eₘₑ ≥eₘₐₓ/aₘₑ, eₘₐₓ étant au moins égal à l'épaisseur la plus grande parmi l'épaisseur d'un collecteur de courant et l'épaisseur de l'électrode négative en tenant compte du fluage éventuel du matériau qui la constitue.

### Protection optimale

Dans la variante optimale de protection d'une batterie au lithium, les films protecteurs ont pour but d'empêcher le contact entre un élément pénétrant conducteur, les collecteurs de courant des électrodes positives et les films métalliques formant les électrodes négatives. Cette variante peut être mise en oeuvre selon divers modes de réalisation.

Lorsque les électrodes terminales sont des électrodes négatives, on appose un film protecteur sur la face extérieure de chaque électrode terminale, en choisissant un matériau et une épaisseur de film tels que eₘₑ ≥ e_{max-Tot} /aₘₑ, e_{max-Tot} étant au moins égal à l'épaisseur de l'ensemble des batteries élémentaires superposées, et on appose un film protecteur :
- soit sur chacune des faces des collecteurs de courant des électrodes positives, en choisissant un matériau et une épaisseur de film tels que eₘₑ ≥eₘₐₓ/aₘₑ, eₘₐₓ étant au moins égal à l'épaisseur d'un collecteur de courant ;
- soit sur chacune des faces des électrodes négatives intermédiaires, en choisissant un matériau et une épaisseur de film tels que eₘₑ ≥eₘₐₓ/aₘₑ, eₘₐₓ étant au moins égal à l'épaisseur d'une électrode négative, en tenant compte du fluage éventuel du matériau d'électrode négative.

Lorsque les électrodes terminales sont des électrodes positives, on appose un film protecteur sur l'une des faces du collecteur de courant de chaque électrode terminale, en choisissant un matériau et une épaisseur de film tels que eₘₑ ≥ e_{max-Tot} /aₘₑ, e_{max-Tot} étant au moins égal à l'épaisseur de l'ensemble des batteries élémentaires superposées, et on appose un film protecteur :
- soit sur chacune des faces des collecteurs de courant des électrodes positives, en choisissant un matériau et une épaisseur de film tels que eₘₑ ≥eₘₐₓ/aₘₑ, eₘₐₓ étant au moins égal à l'épaisseur d'un collecteur de courant ;
- soit sur chacune des faces des électrodes négatives intermédiaires, en choisissant un matériau et une épaisseur de film tels que eₘₑ ≥eₘₐₓ/aₘₑ, eₘₐₓ étant au moins égal à l'épaisseur d'une électrode négative, en tenant compte du fluage éventuel du matériau d'électrode négative.

Bien entendu, les différents cas peuvent être combinés, étant entendu qu'une augmentation de l'élasticité du matériau formant un film protecteur et/ou de l'épaisseur du film protecteur, et/ou une augmentation du nombre de films protecteurs augmentent la sécurité de fonctionnement de la batterie. A cet égard, il est souhaitable que le matériau utilisé pour former les films protecteurs présente un certain degré de plasticité, de sorte qu'il ne se rétracte pas lorsqu'il rompt après un étirement maximal. Cependant, compte tenu du confinement des divers matériaux, le risque que le film protecteur ne se rétracte après avoir atteint son étirement maximal est faible, même lorsque le degré de plasticité est faible.

Outre la protection contre la pénétration d'éléments conducteurs, la présence de films protecteurs dans les batteries intermédiaires a pour effet, lors de l'écrasement de la batterie, d'empêcher le contact direct entre les collecteurs de courant de deux électrodes adjacentes ou entre le collecteur de courant d'une électrode et le film métallique constituant une électrode adjacente. Lorsque deux électrodes se rapprochent sous l'effet d'une pression extérieure, la résistance du court circuit qui se produit est fortement augmentée du fait de la présence du film protecteur et, par voie de conséquence, l'intensité du courant de court-circuit est fortement diminuée, ce qui améliore la sécurité de fonctionnement de la batterie.

Lorsqu'un film Fp est placé sur la face extérieure d'une électrode terminale, il est avantageusement constitué par un matériau élastomère tel que par exemple le caoutchouc naturel, le polyisoprène, le polybutadiène, les copolymères butadiène-styrène (SBR) ou butadiène-acrylonitrile (NBR).

La présence d'un film de protection externe est particulièrement utile pour une batterie selon l'invention, constituée de plusieurs groupes de batteries élémentaires assemblées en parallèle, lesdits groupes étant eux-mêmes assemblés en série.

Lorsque le film protecteur Fp est un film interne (c'est-à-dire un film qui n'est pas placé sur la face externe d'une électrode terminale), il est en contact avec une électrode. Lorsque l'électrode est un film d'un matériau métallique, le film protecteur Fp est placé entre ledit film de matériau métallique et le film formant l'électrolyte. Lorsque l'électrode est constituée par un collecteur de courant portant un film de matière active d'électrode, le film protecteur Fp est placé entre le collecteur de courant et le film de matière active d'électrode.

Un film protecteur interne est constitué par un matériau qui a une conduction électronique C1 proche de la conductivité électronique C2 du matériau d'électrode avec lequel il est en contact et très inférieure à la conductivité électronique C3 du collecteur de courant. Les conductivités C1, C2 et C3 sont de préférence telles que 0,5≤C1/C2≤2, et C2≤C3/100.

Le matériau qui constitue le film protecteur est un matériau polymère élastique qui ne perturbe pas le fonctionnement de la batterie, ledit matériau étant stable dans le domaine de potentiel et de température dans lequel la batterie fonctionne. Ledit matériau polymère comprend essentiellement au moins un polymère, un agent de conduction électronique et éventuellement une ou plusieurs charges.

Le polymère peut être un polymère de fluorovinylidène (PVDF), un copolymère de fluorovinylidène et d'hexafluoropropylène (PVDF-HFP), un copolymère styrène/butadiène (SBR), un polymère d'oxyde d'éthylène (POE), un copolymère d'oxyde d'éthylène, ou un mélange de ces polymères.

L'agent de conduction électronique peut être par exemple du noir de carbone, du noir d'acétylène, du graphite éventuellement sous forme expansée, du carbone sous forme de nanotubes.

Un film de protection interne constitué par un matériau qui ne contient pas de sel de lithium et dans lequel le polymère n'est pas un polymère solvatant confère une protection contre les courts-circuits et une protection chimique. Dans ce but, le polymère du film de protection interne est choisi de préférence parmi les polymère de fluorovinylidène (PVDF), les copolymères de fluorovinylidène et d'hexafluoropropylène (PVDF-HFP), et les copolymères styrène/butadiène (SBR).

Dans une batterie selon l'invention, une électrode positive est constituée par un collecteur de courant portant un film de matériau d'électrode sur l'une de ses faces ou sur ses deux faces.

Le collecteur de courant de l'électrode positive peut être un film d'aluminium ou de titane, éventuellement revêtu d'un film anticorrosion. Le film anti-corrosion peut être un film de matériau polymère contenant une charge conductrice électronique. Le polymère peut être choisi parmi les polymères fluorés (par exemple un polyfluorure de polyvinylidène PVDF, ou un poly tétrafluoroéthylène PTFE) et les polymères acryliques. La charge conductrice électronique peut être choisie parmi le noir de carbone, le noir d'acétylène, le graphite, les nanotubes de carbone. L'épaisseur du film anti-corrosion représente de préférence au plus 25% de l'épaisseur de la feuille métallique formant le collecteur.

Le matériau d'électrode positive comprend au moins une matière active d'électrode positive. Il est de préférence sous forme d'un matériau composite d'électrode contenant en plus de la matière active d'électrode, au moins l'un des constituants suivants : agent de conduction ionique, agent de conduction électronique, liant.

La matière active de l'électrode positive peut être choisie notamment parmi Li₁₊ₓV₃O₈, 0<x<4, LiₓV₂O₅,nH₂O, (0<x<3, 0<n<2), LiFePO₄, les phosphates et les sulfates de fer hydratés ou non, les phosphates et les sulfates de vanadyle hydratés ou non [par exemple VOSO₄ et LiₓVOPO₄,nH₂O (0<n<3, 0<x<2)], LiMn₂O₄, LiNiO₂, les composés dérivés de LiMn₂O₄ obtenus par substitution de préférence par Al, Ni et Co, LiMnO₂, les composés dérivés de LiMnO₂ obtenus par substitution de préférence par Al, Ni et Co, LiCoO₂, les composés dérivés de LiCoO₂ obtenus par substitution de préférence par Al, Ti, Mg, Ni et Mn [par exemple LiAlₓNi_{y}Co_{(1-x-y)}O₂, (x<0,5, y<1)]. Le phosphate LiFePO₄ est particulièrement préféré.

L'agent de conduction électronique du matériau composite d'électrode positive peut être du carbone, en particulier du noir de carbone, du noir d'acétylène, du graphite, des nanotubes de carbone, ou un mélange de ces composés.

L'agent de conduction ionique du matériau composite d'électrode positive est un sel de lithium, de préférence celui de l'électrolyte.

Le liant du matériau composite d'électrode positive est un liant organique stable électrochimiquement dans le domaine de fonctionnement de l'électrode positive. A titre d'exemple, on peut citer les homopolymères du fluorure de polyvinylidène ou un copolymère éthylène propylène diène. Un poly(fluorure de polyvinylidène) est particulièrement préféré. Lorsque l'électrolyte est un électrolyte polymère, on peut utiliser avantageusement comme liant un polymère analogue à celui de l'électrolyte.

Une électrode composite positive peut être élaborée en introduisant dans un solvant volatil, la matière active et le cas échéant, le liant, et/ou l'agent de conduction électronique et/ou l'agent de conduction ionique, en épandant le mélange ainsi obtenu sur un disque de métal servant de collecteur, puis en évaporant le solvant à chaud sous atmosphère d'azote. Une électrode positive peut en outre être élaborée par extrusion.

Dans une batterie selon l'invention, du type "batterie au lithium", l'électrode négative peut être un film de lithium, d'un composé intermétallique ou d'un alliage de lithium choisi par exemple parmi les alliages β-LiAl, γ-LiAl, Li-Pb (par exemple Li₇Pb₂), Li-Cd-Pb, Li-Sn, Li-Sn-Cd, Li-Si, Li-Sn dans différentes matrices, notamment des matrices oxygénées ou des matrices métalliques (par exemple Cu, Ni, Fe, Fe-C), Li-Al-Mn). L'épaisseur du film est de préférence entre 10 et 100 µm.

Lorsque la batterie comprend plusieurs batteries élémentaires dans lesquelles les électrodes négatives sont constituées par des films de matériau métallique, notamment du lithium, il est indispensable qu'un film protecteur soit interposé entre chaque collecteur de courant d'électrode positive et le film de matériau métallique le plus proche.

Dans une batterie au lithium métal, LiTFSI est particulièrement préféré comme sel de lithium pour l'électrolyte.

Dans une batterie selon l'invention du type "batterie aux ions lithium", l'électrode négative est constituée par un collecteur de courant portant un film de matériau d'électrode négative.

Le collecteur de courant peut être constitué par un film de cuivre, un film de nickel, un film de titane ou un film d'acier.

Le matériau d'électrode négative comprend au moins une matière active d'électrode négative. Il est de préférence sous forme d'un matériau composite qui contient en plus de la matière active d'électrode négative, au moins l'un des constituants suivants : agent de conduction ionique, agent de conduction électronique, liant.

La matière active de l'électrode négative est un matériau capable d'insérer de manière réversible des ions lithium à bas potentiel rédox, ledit matériau étant lithié au cours d'une étape préliminaire. Le matériau d'insertion peut être choisi parmi les matériaux carbonés, naturels ou de synthèse. Ces matériaux carbonés peuvent être par exemple un coke de pétrole, un graphite, un whisker de graphite, une fibre de carbone, un méso carbone micro grains, (désigné usuellement par meso carbon micro bead), un coke de brai (désigné usuellement par pitch coke), un coke aiguille (désigné usuellement par needle coke). Le matériau d'insertion peut en outre être choisi parmi les oxydes tels que par exemple LiₓMoO₂, LiₓWO₂, LiₓFe₂O₃, Li₄Ti₅O₁₂, LiₓTiO₂ ou parmi les sulfures tels que par exemple Li₉Mo₆S₆ et LiTiS₂ ou parmi les oxysulfures. On peut également utiliser des composés permettant de stocker réversiblement le lithium à bas potentiel, tels que des vanadates amorphes (par exemple LiₓNiVO₄), les nitrures (par exemple Li_{2,6-x}Co_{0,4}N, Li₂₊ₓFeN₂, Li₇₊ₓMnN₄), les phosphures (par exemple Li₉₋ₓVP₄), les arséniures (par exemple Li₉₋ₓVAs₄) et les oxydes à décomposition réversible (par exemple CoO, CuO, Cu₂O).

Le liant du matériau composite d'électrode négative est un liant organique stable électrochimiquement dans le domaine de fonctionnement de l'électrode négative. A titre d'exemple, on peut citer les homopolymères du fluorure de polyvinylidène ou un copolymère éthylène propylène diène. Un poly(fluorure de polyvinylidène) est particulièrement préféré. Lorsque l'électrolyte est un électrolyte polymère, on peut utiliser avantageusement comme liant un polymère analogue à celui de l'électrolyte.

Une électrode composite négative peut être élaborée en introduisant le composé carboné dans une solution du liant dans un solvant polaire aprotique, en épandant le mélange obtenu sur un disque de métal servant de collecteur, puis en évaporant le solvant à chaud sous atmosphère d'azote. Une électrode négative peut en outre être élaborée par extrusion.

L'agent de conduction électronique dans le matériau d'électrode négative peut être du carbone, en particulier du noir de carbone, du noir d'acétylène, du graphite, des nanotubes de carbone, ou un mélange de ces composés.

L'agent de conduction ionique du matériau composite d'électrode négative est un sel de lithium, de préférence celui de l'électrolyte.

Dans une batterie aux ions lithium, LiPF₆ est particulièrement préféré comme sel de lithium pour l'électrolyte.

L'électrolyte d'une batterie mutlicouche selon l'invention comprend au moins un sel de lithium en solution dans un solvant. Le sel peut être choisi notamment parmi LiClO₄, LiPF₆, LiAsF₆, LiBF₄, LiCF₃SO₃, LiSbF₆, LiBC₄O₈, (FSO₂)₂NLi, les bisperfluoroalkyl sulfonimidures de lithium (notamment le bis(trifluorométhyl) sulfonimidure de lithium LiTFSI), et les bis- ou tris(perfluoroalyl)sulfonylméthides de lithium.

Le solvant peut être un liquide solvatant, un polymère solvatant solide éventuellement plastifié par addition d'un liquide, ou un polymère gel.

Lorsque le solvant de l'électrolyte est un liquide, l'électrolyte imprègne un séparateur placé entre les électrodes. Le solvant liquide peut être constitué par un ou plusieurs composés polaires aprotiques choisis parmi les carbonates linéaires ou cycliques, les éthers linéaires ou cycliques, les esters linéaires ou cycliques, les sulfones linéaires ou cycliques, les sulfamides et les nitriles. Le solvant est constitué de préférence par au moins deux carbonates choisis parmi le carbonate d'éthylène (EC), le carbonate de propylène, le carbonate de diméthyle (DMC), le carbonate de diéthyle et le carbonate de méthyle et d'éthyle. Une batterie ayant un électrolyte à solvant polaire aprotique fonctionne généralement dans un domaine de température de -20°C à 60°C.

Lorque l'électrolyte contient un solvant polymère solvatant, ledit polymère peut être choisi parmi les polyéthers de structure linéaire, peigne ou à blocs, formant ou non un réseau, à base de poly(oxyde d'éthylène) ; les copolymères contenant le motif oxyde d'éthylène ou oxyde de propylène ou allylglycidyléther ; les polyphosphazènes ; les réseaux réticulés à base de polyéthylène glycol réticulé par des isocyanates ; les copolymères d'oxyéthylène et d'épichlorhydrine tels que décrits dans FR-2 770 034 ; et les réseaux obtenus par polycondensation et portant des groupements qui permettent l'incorporation de groupements réticulables. On peut également citer les copolymères à blocs dans lesquels certains blocs portent des fonctions qui ont des propriétés rédox. Une batterie ayant un électrolyte à solvant polymère fonctionne généralement dans un domaine de température de 50°C à 120°C.

Le solvant de l'électrolyte peut en outre être un mélange d'un composé liquide aprotique polaire choisi parmi les composés polaires aprotiques cités ci-dessus et d'un polymère solvatant. Il peut comprendre de 2 à 98% en volume de solvant liquide, suivant que l'on souhaite un électrolyte plastifié avec une faible teneur en composé aprotique polaire, ou un électrolyte gélifié avec une teneur élevée en composé aprotique polaire. Lorsque le solvant polymère de l'électrolyte porte des fonctions ioniques, le sel de lithium est facultatif.

Le solvant de l'électrolyte peut aussi être un mélange d'un composé polaire aprotique tel que défini ci-dessus ou d'un polymère solvatant tel que défini ci-dessus, et d'un polymère polaire non solvatant comprenant des unités contenant au moins un hétéroatome choisi parmi le soufre, l'oxygène, l'azote et le fluor. Un tel polymère non solvatant peut être choisi parmi les homopolymères et les copolymères d'acrylonitrile, les homopolymères et les copolymères de fluorovinylidène, et les homopolymères et les copolymères de N-vinylpyrrolidone. Le polymère non solvatant peut en outre être un polymère portant des substituants ioniques, et notamment un sel de polyperfluoroéther sulfonate (tel qu'un Nafion^{®} précité par exemple) ou un sel de polystyrène sulfonate.

Dans un autre mode de réalisation, l'électrolyte de la batterie de la présente invention peut être un solide conducteur inorganique, choisi parmi les composés désignés habituellement par Lisicon, c'est-à-dire des solutions solides Li₄XO₄-Li₃YO₄ (X = Si ou Ge ou Ti ; Y = P ou As ou V), Li₄XO₄-Li₂AO₄ (X = Si ou Ge ou Ti ; A = Mo ou S), Li₄XO₄-LiZO₂ (X = Si ou Ge ou Ti ; Z = Al ou Ga ou Cr), Li₄XO₄-Li₂BXO₄ (X = Si ou Ge ou Ti ; B = Ca ou Zn), LiO₂-GeO₂-P₂O₅, LiO₂-SiO₂-P₂O₅, LiO₂-B₂O₃-Li₂SO₄, LiF-Li₂S-P₂S₅, Li₂O-GeO₂-V₂O₅ ou LiO₂-P₂O₅-PON. Une batterie au lithium comprenant un tel électrolyte fonctionne dans un très large domaine de température, de l'ordre de -20°C à 100°C.

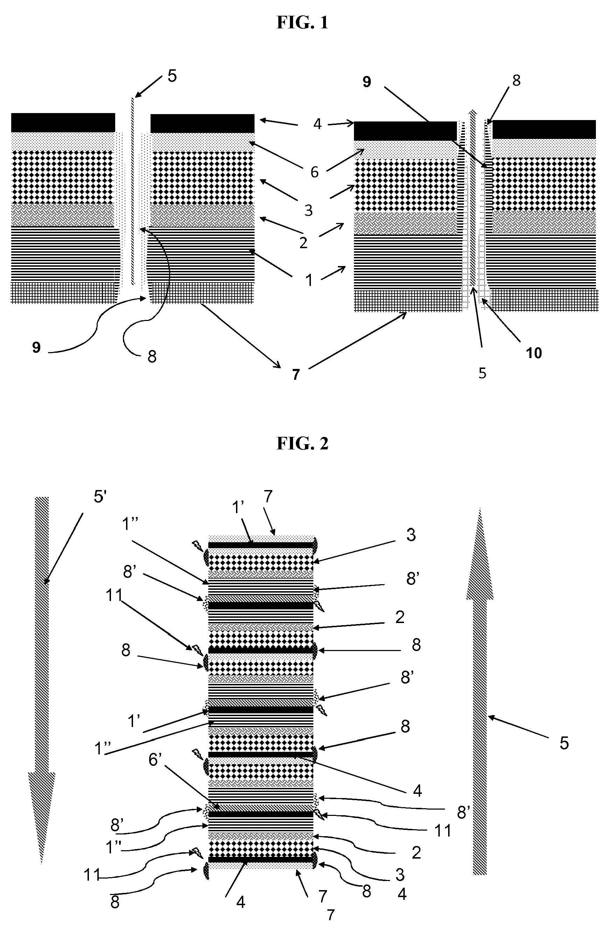

Les figures 1 à 5 représentent à titre d'exemples quelques cas particuliers de configuration de batteries selon l'invention.

Dans les différentes figures, les mêmes indices désignent les mêmes éléments. La correspondance entre les indices et les éléments est comme suit :
1 film de lithium constituant une électrode négative
1' collecteur de courant d'un éléctrode négative
1" film de matière active d'électrode négative
2 film d'électrolyte
3 film de matière active d'électrode positive
4 collecteur de courant d'électrode positive
5 clou
6 film protecteur pour une électrode positive
6' film protecteur pour une électrode négative
7 film protecteur externe
8 gainage produit par étirement d'un film 6
8' gainage produit par étirement d'un film 6'
9 gainage produit par fluage d'un film de lithium 1
10 gainage formé par l'étirement d'un film 7
11 contact électrique entre un élément pénétrant conducteur et un collecteur de courant.

La figure 1 représente une vue schématique d'une batterie élémentaire comprenant un film de protection interne 6 et un film de protection externe 7. Dans cette batterie, l'électrode négative est un film de lithium métallique 1 qui porte sur sa face externe un film de protection 7. L'électrode positive comprend un collecteur de courant 4 portant un film de matière active d'électrode 3, ainsi qu'un film protecteur 6 placé entre le collecteur et le film de matière active. L'électrolyte 2 est placé entre les électrodes. Les figures 1a et 1b représentent schématiquement l'effet de l'insertion d'un clou 5 du côté de l'électrode positive (fig. 1a) et du côté de l'électrode négative (fig. 1b). La figure 1a met en évidence l'étirement du film protecteur 6 qui forme un gainage 8 du clou 5 jusqu'au-delà de l'électrode négative 1, et le fluage du film de lithium 1 qui forme un gainage 9. La figure 1b montre l'étirement du film protecteur 7 qui forme un gainage 10 du clou, l'étirement du film de lithium 1 qui forme lui-même un gainage 9 le long du clou dont il est isolé par le gainage 10, et l'étirement du film protecteur 6 qui forme un gainage 8 autour du clou (isolé du gainage de lithium par le gainage 10) jusqu'au-delà du collecteur de courant 4.

La figure 2 représente le schéma d'une batterie aux ions lithium correspondant au 2^{ème} mode de réalisation d'une protection minimale. La batterie comprend plusieurs batteries élémentaires. Les deux électrodes terminales sont des électrodes positives comprenant chacune un collecteur de courant 4 portant un film protecteur externe 7 sur sa face externe et un film de matière 3 sur face interne. Les électrode positives non terminales comprennent chacune un collecteur de courant 4 portant un film de matière active 3 sur chacune de leurs faces. Chacune des électrodes négatives est constituée par un collecteur de courant 1' portant un film 1" de matière active sur chacune des ses faces. Ainsi, une batterie élémentaire intermédiaire partage ses collecteurs de courant avec les deux batteries élémentaires qui lui sont adjacentes. Les films 2 représentent les films d'électrolyte.

Les collecteurs de courant positifs 4 portent sur leurs faces inférieures un film de protection 6. Les collecteurs de courant négatifs 1& portent sur leurs faces supérieures, un film de protection 6'.

Les éléments 5 et 5' sont les éléments pénétrants représentés sur la figure simplement pour indiquer un sens de pénétration.

Lors de la pénétration d'un élément pointu dans le sens indiqué par l'élément 5, les films de protection 6 sont étirés et forment un gainage 8 sur la tranche des collecteurs de courant positifs 4. Les films de protection 6' sont étirés et forment un gainage au moins sur une partie des films de matière active négative 1", laissant libre la tranche des collecteur de courant négatif 1'. Il y a donc contact entre l'élément pénétrant 5 et les collecteurs de courant négatifs, mais pas de contact entre des collecteurs de courant de signe opposés, puisque les collecteurs de courant positifs sont protégés.

Lors de la pénétration d'un élément pointu dans le sens indiqué par l'élément 5', les films de protection 6' sont étirés et forment un gainage 8' sur la tranche des collecteurs de courant négatifs 1'. Les films de protection 6 sont étirés et forment un gainage au moins sur une partie des films de matière active positive 3, laissant libre la tranche des collecteur de courant positif 4. Il y a donc contact entre l'élément pénétrant 5 et les collecteurs de courant positifs, mais pas de contact entre des collecteurs de courant de signe opposés, puisque les collecteurs de courant négatifs sont protégés.

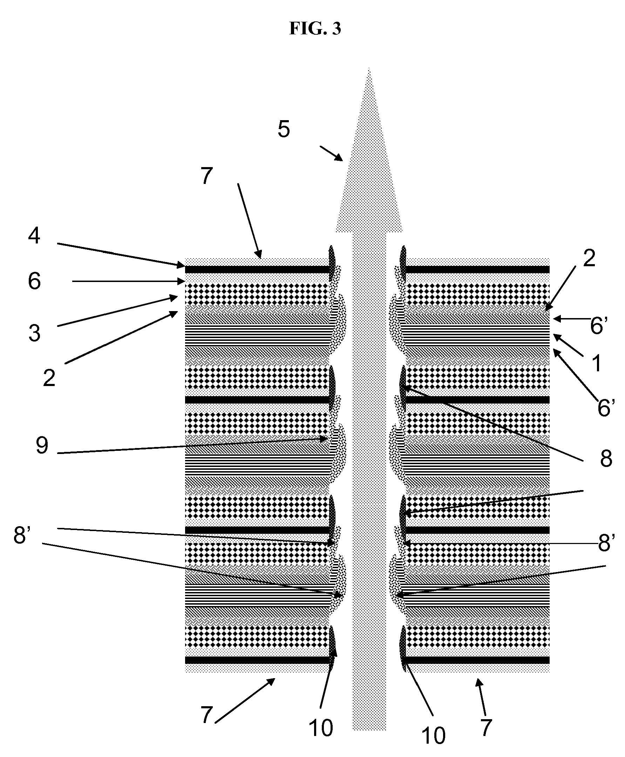

La figure 3 représente une vue schématique d'une batterie comprenant plusieurs batteries élémentaires, dans laquelle les électrodes négatives 1 sont des électrodes de lithium, les électrodes terminales sont des électrodes positives, un film protecteur 6 est placé entre chaque collecteur de courant 4 d'électrode positive et le(s) film(s) de matière active 3 qu'il porte. Un film protecteur 6' est placé sur chaque face des électrodes négatives. La figure 2 illustre l'effet de l'insertion d'un clou 5, notamment le fluage du film de lithium 1 qui forme un gainage 9 le long du clou 5, l'étirement des films 6' qui forme un gainage 8' et l'étirement du film protecteur 6 qui forme un gainage 8 autour du clou 5 jusqu'au-delà du collecteur de courant 4.

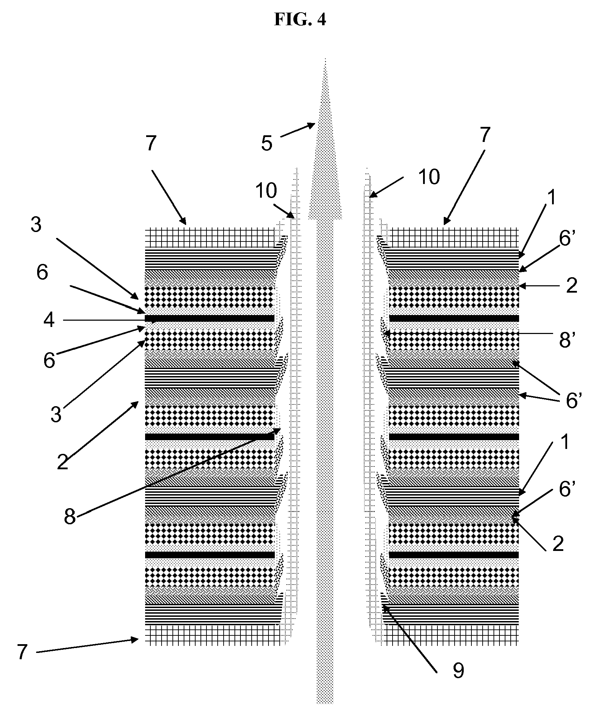

La figure 4 représente une vue schématique d'une batterie comprenant plusieurs batteries élémentaires, dans laquelle les électrodes négatives 1 sont des électrodes de lithium, les électrodes terminales sont des électrodes négatives, un film protecteur 6 est placé entre chaque collecteur de courant d'électrode positive 4 et le(s) film(s) de matière active 3 qu'il porte, Un film de protection 7 est placé sur la face externe de chacune des électrodes terminales. Un film protecteur 6' est placé sur chaque face de chacune des électrodes négatives non terminales. La figure 3 illustre l'effet de l'insertion d'un clou 5, notamment l'étirement du film 7 qui forme un gainage 10 autour du clou, le fluage du film de lithium 1 qui forme un gainage 9 le long du clou 5 isolé par le gainage 10, l'étirement du film 6' qui forme un gainage 8' autour du clou pour éviter le contact du lithium avec la matière active positive, et l'étirement du film protecteur 6 qui forme un gainage 8 autour du clou 5 jusqu'au-delà du collecteur de courant 4.

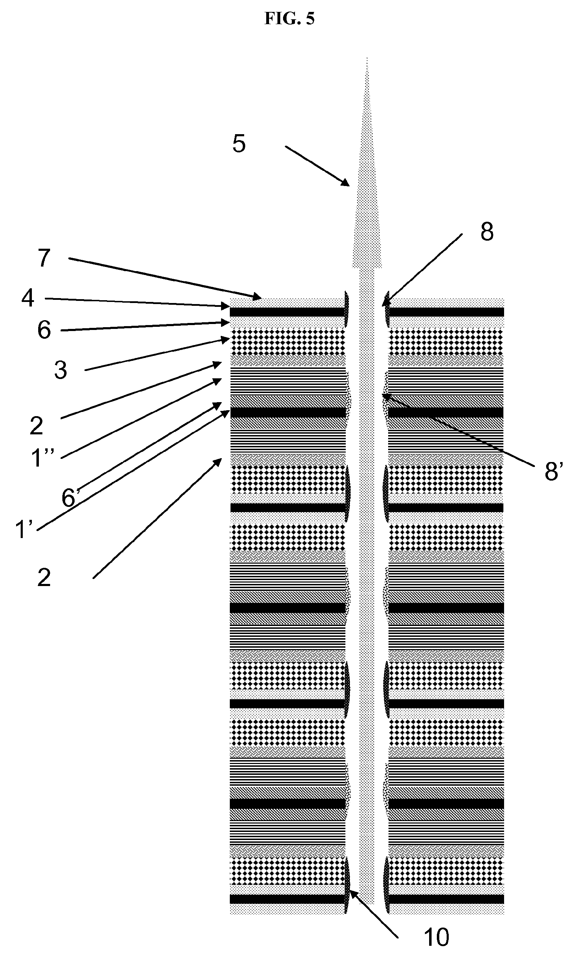

La figure 5 représente une vue schématique d'une batterie comprenant plusieurs batteries élémentaires dans laquelle les électrodes négatives sont constituées par un collecteur de courant 1' et un film 1" de matière active séparés par un film de protection 6', et les électrodes positives sont constituées par un collecteur de courant 4 portant un film de matière active d'électrode 3. Un film d'électrolyte 2 est placé entre les électrodes. Un film de protection 7 est placé sur la face externe de chacune des électrodes terminales. Un film protecteur 6' est placé sur chaque face de chacune des électrodes négatives non terminales. La figure 4 illustre l'effet de l'insertion d'un clou 5, notamment l'étirement du film 7 qui forme un gainage 10 autour du clou, l'étirement de chaque film 6' qui forme un gainage 8' autour du clou, et l'étirement de chaque film protecteur 6 qui forme un gainage 8.

### EXEMPLES

La présente invention est décrite plus en détails par les exemples suivants, auxquels elle n'est cependant pas limitée.

Les produits suivants ont été utilisés:
- polymère d'oxyde d'éthylène POE, commercialisé par Dow Chemical sous la référence WSRN750 ;
- copolymère d'oxyde d'éthylène et d'oxyde de propylène (OE-OP 90/10) commercialisé par Zeon sous la référence ZSN-8100 ;
- copolymère PVDF/HFP commercialisé par Solvay, sous la référence 21510 ;
- polymère PVDF commercialisé par Solvay sous la référence 6020 ;
- LiTFSI commercialisé par la société 3M sous la référence HQ115 ;
- noir de carbone commercialisé par Akzo Nobel sous la référence Ketjenblack EC600 ;
- LiFePO₄ commercialisé par Phostech Lithium Inc sous la référence P1 ;
- polymère SBR commercialisé par Zeon sous la dénomination Nipol SBR ;
- noir d'acétylène commercialisé par SN2A sous la dénomination Y200 ;
- nanotubes de carbone commercialisés par ARKEMA sous la dénomination Graphistrength.

### Exemple 1

### Film élastique à base de PVDF-HFP / noir de carbone

Cet exemple concerne une batterie multicouche comprenant une batterie élémentaire qui a une structure conforme à celle représentée sur la figure 1 (à l'exception des films externes 7), et les différents constituants sont comme suit :
Electrode négative 1 :
   film de lithium, épaisseur : 51 µm
Electrolyte 2 :
   film de 20 µm constitué par un mélange de 49% de polymère POE, 11% de LiTFSI et 40% de copolymère PVDF + HFP, (% en poids)
Matière active d'électrode 3 :
   film de 48 µm, constitué par un mélange de 74% de LiFePO₄ 1,5% de noir de carbone, 19,4% de polymère POE, 5,1 % de LiTFSI 5,1 %
Film protecteur 6 :
   film de 17 µm constitué par un mélange de copolymère PVDF-HFP, de polymère POE, de LiTFSI, et de noir de carbone, dans les proportions pondérales 37,3%, 42,5%, 13,5%, 6,66%
Collecteur de courant 4 :
   film d'aluminium de 13 µm revêtu de chaque coté d'une couche anticorrosion de 2 µm (polymère +carbone) soit au total une épaisseur de 17 µm, commercialisé par Exopack sous la dénomination Product 2651.

Le film élastique, qui a une épaisseur de 17 µm, a une résistivité de 15 Ω.cm et un allongement à la rupture de 100%, mesuré sur un dynamomètre.

On a élaboré 5 batteries selon ce schéma, ainsi que 5 batteries similaires mais sans le film élastique. On effectué des tests de perforation sur chacune des batteries en enfonçant perpendiculairement à la surface du film de lithium, un clou dont la longueur est au moins égale à l'épaisseur de la batterie.

Dans les 5 batteries incorporant un film élastique PTC, on a constaté ni feu ni court-circuit. Dans les 5 batteries sans film PTC, on a constaté un court circuit dans chaque batterie et un feu dans 3 batteries sur 5.

### Exemple 2

### Film élastique à base de SBR

Cet exemple concerne une batterie multicouche comprenant une batterie élémentaire qui a également une structure analogue à celle de la batterie de l'exemple 1 et dans laquelle les divers composants sont les suivants :
Electrode négative 1 :
   film de lithium, épaisseur : 51 µm
Electrolyte 2 :
   film de 20 µm constitué par un mélange de 49% de polymère POE, 11% de LiTFSI et 40% de copolymère PVDF + HFP, (% en poids)
Matière active d'électrode 3 :
   film de 48 µm, constitué par un mélange de 74% de LiFePO₄ 1,5% de noir de carbone, 19,4% de polymère POE, 5,1 % de LiTFSI 5,1 %,
Film élastique 6 :
   film de 34 µm constitué par un mélange SBR et de noir d'acétylène dans un rapport en poids de 70/30.
Collecteur de courant 4 :
   film d'aluminium de 13 µm revêtu de chaque coté d'une couche anticorrosion de 2 µm (polymère +carbone) soit au total une épaisseur de 17 µm.

La résistivité du film élastique est de 10 Ω.cm. Son allongement à la rupture est de 50% mesuré sur un dynamomètre.

On a élaboré 5 batteries selon ce schéma, ainsi que 5 batteries similaires mais sans le film élastique. On effectué des tests de perforation sur chacune des batteries de la même manière que dans l'exemple 1.

Dans les 5 batteries incorporant un film élastique PTC, on a constaté ni feu ni court-circuit Dans les 5 batteries sans film PTC, on a constaté un court circuit dans chaque batterie et un feu dans 3 batteries sur 5.

### Exemple 3

### Film élastique à base de PVDF

On a élaboré une batterie multicouche comprenant une batterie élémentaire qui a une structure analogue à celle de la batterie de l'exemple 1 et dans laquelle les divers composants sont les suivants:
Electrode négative 1 :
   film de lithium, épaisseur : 51 µm
Electrolyte 2 :
   film de 20 µm constitué par un mélange de 49% de polymère POE, 11% de LiTFSI et 40% de copolymère PVDF + HFP, (% en poids)
Matière active d'électrode 3 :
   film de 48 µm, constitué par un mélange de 74% de LiFePO₄ 1,5% de noir de carbone, 19,4% de polymère POE, 5,1 % de LiTFSI 5,1 %,
Film élastique 6 :
   film de 16 µm constitué par un mélange de polymère PVDF (94% en poids) et de nanotubes de carbone (6% en poids)
Collecteur de courant 4
   film d'aluminium de 13 µm revêtu de chaque coté d'une couche anticorrosion de 2 µm (polymère +carbone) soit au total une épaisseur de 17 µm.

La résistivité du film élastique est de 17 Ω.cm. Son allongement à la rupture est de 105% mesuré sur un dynamomètre.

On a élaboré 5 batteries selon ce schéma, ainsi que 5 batteries similaires mais sans le film élastique. On effectué des tests de perforation sur chacune des batteries de la même manière que dans l'exemple 1.

Dans les 5 batteries incorporant un film élastique PTC, on a constaté ni feu ni court-circuit. Dans les 5 batteries sans film PTC, on a constaté un court circuit dans chaque batterie et un feu dans 3 batteries sur 5.

### Exemple 4

### film élastique à base de PVDF-HFP

Cet exemple concerne une batterie multicouche comprenant une batterie élémentaire qui a une structure analogue à celle de la batterie de l'exemple 1 et dans laquelle les divers composants sont les suivants :
Electrode négative 1 :
   film de lithium, épaisseur : 51 µm
Electrolyte 2 :
   film de 20 µm constitué par un mélange de 49% de polymère POE, 11% de LiTFSI et 40% de copolymère PVDF + HFP, (% en poids)
Matière active d'électrode 3 :
   film de 48 µm, constitué par un mélange de 74% de LiFePO₄ 1,5% de noir de carbone, 19,4% de polymère POE, 5,1 % de LiTFSI 5,1 %,
Film élastique 6 :
   film de 32 µm constitué par un mélange de copolymère PVDF-HFP (75% en poids) et de graphite exfolié (25% en poids)
Collecteur de courant 4 :
   film d'aluminium de 13 µm revêtu de chaque coté d'une couche anticorrosion de 2 µm (polymère +carbone) soit au total une épaisseur de 17 µm.

La résistivité du film élastique est de 44 Ω.cm. Son allongement à la rupture est de 54% mesuré sur un dynamomètre.

On a élaboré 5 batteries selon ce schéma, ainsi que 5 batteries similaires mais sans le film élastique. On effectué des tests de perforation sur chacune des batteries de la même manière que dans l'exemple 1.

Dans les 5 batteries incorporant un film élastique PTC, on a constaté ni feu ni court-circuit. Dans les 5 batteries sans film PTC, on a constaté un court circuit dans chaque batterie et un feu dans 3 batteries sur 5.

### Exemple 5

### Film élastique à l'électrode négative

Cet exemple concerne une batterie multicouche comprenant une batterie élémentaire qui a la constitution suivante :
Collecteur de courant 1'
   film de cuivre, épaisseur : 17 µm
Film élastique 6'
   film de 32 µm constitué par un mélange de copolymère PVDF-HFP (75% en poids) et de graphite exfolié (25% en poids)
Matière active d'électrode négative 1"
   film de 50 µm constitué par un mélange de copolymère PVDF-HFP (8% en poids) et de graphite (92% en poids)
Electrolyte 2
   film de 20 µm constitué par un mélange [EC/DMC (1/3) + LiTFSI 1 M] 60% + PVDF/HFP 40%
Matière active d'électrode 3
   film de 100 µm, constitué par un mélange de 85% de LiCoO₂, 5% de noir de carbone, 10% de polymère PVDF/HFP
Collecteur de courant 4
   film d'aluminium de 17 µm.

La résistivité du film élastique est de 44 Ω.cm. Son allongement à la rupture est de 54% mesuré sur un dynamomètre.

On a élaboré 5 batteries selon ce schéma, ainsi que 5 batteries similaires mais sans le film élastique. On effectué des tests de perforation sur chacune des batteries de la même manière que dans l'exemple 1.

Dans les 5 batteries incorporant un film élastique PTC, on a constaté ni feu ni court-circuit. Dans chacune des 5 batteries sans film PTC, on a constaté un court circuit et un feu.

### Exemple 6

### Film élastique à l'électrode positive

Cet exemple concerne une batterie multicouche comprenant une batterie élémentaire qui a la constitution suivante :
Collecteur de courant 1'
   film de cuivre, épaisseur : 17 µm
Matière active d'électrode négative 1"
   film de 50 µm constitué par un mélange de copolymère PVDF-HFP (8% en poids) et de graphite (92% en poids)
Electrolyte 2
   film de 20 µm constitué par un mélange [EC/DMC (1/3) + LiTFSI 1 M] 60% + PVDF/HFP 40%
Matière active d'électrode 3
   film de 100 µm, constitué par un mélange de 85% de LiCoO₂, 5% de noir de carbone, 10% de polymère PVDF/HFP
Film élastique 6
   film de 32 µm constitué par un mélange de copolymère PVDF-HFP (75% en poids) et de graphite exfolié (25% en poids)
Collecteur de courant 4
   film d'aluminium de 17 µm.

La résistivité du film élastique est de 44 Ω.cm. Son allongement à la rupture est de 54% mesuré sur un dynamomètre.

On a élaboré 5 batteries selon ce schéma, ainsi que 5 batteries similaires mais sans le film élastique. On effectué des tests de perforation sur chacune des batteries de la même manière que dans l'exemple 1.

Dans les 5 batteries incorporant un film élastique PTC, on a constaté ni feu ni aucun court-circuit dans les 5 batteries. Dans chacune des 5 batteries sans film PTC, on a constaté un court circuit et un feu.

## Revendications

1. Batterie constituée par une batterie élémentaire PEN qui comprend un film d'un électrolyte E contenant un sel de lithium entre un film P formant une électrode positive et un film N formant une électrode négative, ou par un empilement de batteries élémentaires PEN, ledit empilement comprenant deux batteries élémentaires terminales entre lesquelles sont éventuellement placées une ou plusieurs batteries élémentaires intermédiaires, ladite batterie étant **caractérisée en ce qu'**elle comprend au moins deux films protecteurs Fp constitués par un matériau élastique, au moins l'une des électrodes de la batterie élémentaire ou de chaque batterie terminale étant en contact avec un film protecteur Fp constitué par un matériau élastique ayant un allongement à la rupture désigné par aₘₑ et une épaisseur désignée par eₘₑ, au moins l'un desdits films protecteurs Fp étant en contact avec une couche de connexion d'une électrode ayant une épaisseur eₘₐₓ, ledit film ayant une épaisseur eₘₑ telle que eₘₑ > eₘₐₓ/aₘₑ.

2. Batterie selon la revendication 1 ou 2, **caractérisée en ce que** l'électrolyte est un électrolyte solide.

3. Batterie selon la revendication 1, **caractérisée en ce qu'**une électrode positive est constituée par un collecteur de courant, formant notamment couche de connexion, portant un film de matière active d'électrode positive capable d'insérer des ions lithium de manière réversible.

4. Batterie selon l'une quelconque des revendications précédentes, **caractérisée en ce qu'**une électrode négative est constituée par un film d'un matériau métallique, formant notamment couche de connexion, choisi parmi le lithium, les alliages de lithium et les composés intermétalliques de lithium.

5. Batterie selon l'une quelconque des revendications 1 à 3, **caractérisée en ce qu'**une électrode négative est constituée par un collecteur de courant, formant notamment couche de connexion, portant un film de matière active d'électrode négative capable d'insérer des ions lithium de manière réversible.

6. Batterie selon l'une quelconque des revendications précédentes, **caractérisée en ce qu'**elle comprend une seule batterie élémentaire PEN et qu'au moins l'une des faces de chaque électrode est en contact avec ledit film protecteur Fp.

7. Batterie selon l'une quelconque des revendications 1 à 5, **caractérisée en ce qu'**elle comprend des groupes de batteries élémentaires assemblées en parallèle, lesdits groupes de batteries assemblées en parallèle étant assemblés en série.

8. Batterie selon l'une quelconque des revendications 1 à 5, **caractérisée en ce qu'**elle comprend de multiples batteries élémentaires P E N, qui sont empilées de telle sorte que :
- les électrodes positives de deux batteries élémentaires adjacentes sont réunies en une seule et formées par un collecteur de courant unique portant un film de matière active d'électrode positive sur chacune de ses faces ;
- les électrodes négatives de deux batteries élémentaires adjacentes sont réunies en une seule et formées soit par un collecteur de courant unique portant un film de matière active d'électrode négative sur chacune de ses faces ; soit par un film d'un matériau métallique choisi parmi le lithium, les alliages de lithium et les composés intermétalliques de lithium ;
- une électrode terminale positive est constituée par un collecteur de courant portant une matière active d'électrode positive sur l'une de ses faces ;
- une électrode terminale négative est constituée soit par un collecteur de courant portant une matière active d'électrode négative sur l'une de ses faces, soit par un film d'un matériau métallique choisi parmi le lithium, les alliages de lithium et les composés intermétalliques de lithium.

9. Batterie selon la revendication 8, dans laquelle les électrodes négatives sont constituées par un collecteur de courant portant une matière active d'électrode négative, **caractérisée en ce que** :
- elle comprend un film protecteur sur chaque face du collecteur de courant de chaque électrode d'un signe donné,
- ledit film protecteur a une épaisseur eₘₑ telle que eₘₑ ≥eₘₐₓ/aₘₑ, eₘₐₓ étant au moins égal à l'épaisseur d'un collecteur de courant,
- un film protecteur est placé sur la face en amont des collecteurs de courant positif, et sur la face en aval des collecteurs de courant négatifs, "amont" et "aval" s'entendant par rapport au sens de pénétration d'un élément pointu conducteur.

10. Batterie selon la revendication 8, dans laquelle les électrodes négatives sont constituées par un collecteur de courant portant une matière active d'électrode négative, **caractérisée en ce qu'**un film protecteur est apposé sur au moins l'une des faces du collecteur de courant de chaque électrode terminale, ledit film ayant une épaisseur eₘₑ telle que eₘₑ ≥ e_{max-Tot} /aₘₑ, e_{max-Tot} étant au moins égal à l'épaisseur de l'ensemble des batteries élémentaires superposées.

11. Batterie selon la revendication 8, dans laquelle les électrodes négatives sont constituées par un collecteur de courant portant une matière active d'électrode négative, **caractérisée en ce qu'**un film protecteur est apposé sur chaque face du collecteur de courant de chaque électrode d'un signe donné, ledit film ayant une épaisseur telle que que eₘₑ ≥ e_{max-Tot} /aₘₑ, e_{max-Tot} étant au moins égal à l'épaisseur d'une batterie élémentaire.

12. Batterie selon la revendication 8, dans laquelle les électrodes négatives sont constituées par un collecteur de courant portant une matière active d'électrode négative, **caractérisée en ce qu'**un film protecteur est placé sur la face en amont des collecteurs de courant positif, et sur la face en aval des collecteurs de courant négatifs, "amont" et "aval" s'entendant par rapport au sens de pénétration d'un élément pointu conducteur, ledit film ayant une épaisseur eₘₑ telle que eₘₑ ≥ e_{max-Tot} /a_{me,} e_{max-Tot} étant au moins égal à l'épaisseur d'une batterie élémentaire.

13. Batterie selon la revendication 8, dans laquelle les électrodes négatives sont constituées par un film de matériau métallique, **caractérisée en ce qu'**un film protecteur est placé sur chaque face du collecteur de courant de chaque électrode positive, ledit film ayant une épaisseur eₘₑ telle que eₘₑ ≥eₘₐₓ/aₘₑ, eₘₐₓ étant au moins égal à l'épaisseur d'un collecteur de courant de l'électrode positive.

14. Batterie selon la revendication 8, dans laquelle les électrodes négatives sont constituées par un film de matériau métallique, **caractérisée en ce qu'**un film protecteur est placé sur chaque face de chaque électrode négative, ledit film ayant une épaisseur eₘₑ telle que eₘₑ ≥eₘₐₓ/aₘₑ, eₘₐₓ étant au moins égal à l'épaisseur de l'électrode négative en tenant compte de l'étirement du matériau formant cette électrode négative, ou à l'épaisseur de l'électrolyte et de l'électrode positive placé après le film protecteur.

15. Batterie selon la revendication 8, dans laquelle les électrodes négatives sont constituées par un film de matériau métallique, **caractérisée en ce qu'**un film protecteur est placé sur la face en amont des collecteurs de courant positif, et sur la face en aval des électrodes négatives, "amont" et "aval" s'entendant par rapport au sens de pénétration d'un élément pointu conducteur, ledit film ayant une épaisseur eₘₑ telle que eₘₑ ≥eₘₐₓ/aₘₑ, eₘₐₓ étant au moins égal à l'épaisseur la plus grande parmi l'épaisseur d'un collecteur de courant et l'épaisseur de l'électrode négative en tenant compte de son étirement.

16. Batterie selon la revendication 8, dans laquelle les électrodes négatives sont constituées par un film de matériau métallique, et les électrodes terminales sont des électrodes négatives, **caractérisée en ce qu'**un film protecteur est apposé sur la face extérieure de chaque électrode terminale, ledit film ayant une épaisseur eₘₑ telle que eₘₑ ≥ e_{max-Tot} /aₘₑ, e_{max-Tot} étant au moins égal à l'épaisseur de l'ensemble des batteries élémentaires superposées, et un film protecteur est apposé :
- soit sur chacune des faces des collecteurs de courant des électrodes positives, en choisissant un matériau et une épaisseur de film tels que eₘₑ ≥eₘₐₓ/aₘₑ, eₘₐₓ étant au moins égal à l'épaisseur d'un collecteur de courant ;
- soit sur chacune des faces des électrodes négatives intermédiaires, en choisissant un matériau et une épaisseur de film tels que eₘₑ ≥eₘₐₓ/aₘₑ, eₘₐₓ étant au moins égal à l'épaisseur d'une électrode négative, en tenant compte de l'étirement possible du matériau d'électrode négative.

17. Batterie selon la revendication 8, dans laquelle les électrodes négatives sont constituées par un film de matériau métallique, et les électrodes terminales sont des électrodes positives, **caractérisée en ce qu'**un film protecteur est apposé sur l'une des faces du collecteur de courant de chaque électrode terminale, l'épaisseur eₘₑ dudit film étant telle que eₘₑ ≥ e_{max-Tot} /aₘₑ, e_{max-Tot} étant au moins égal à l'épaisseur de l'ensemble des batteries élémentaires superposées, et un film protecteur est apposé :
- soit sur chacune des faces des collecteurs de courant des électrodes positives, en choisissant un matériau et une épaisseur de film tels que eₘₑ ≥eₘₐₓ/aₘₑ, eₘₐₓ étant au moins égal à l'épaisseur d'un collecteur de courant ;
- soit sur chacune des faces des électrodes négatives intermédiaires, en choisissant un matériau et une épaisseur de film tels que eₘₑ ≥eₘₐₓ/aₘₑ, eₘₐₓ étant au moins égal à l'épaisseur d'une électrode négative, en tenant compte de l'étirement possible du matériau d'électrode négative.

18. Batterie selon la revendication 1, **caractérisée en ce qu'**un film protecteur placé sur la face extérieure d'une électrode terminale est constitué par un matériau élastomère choisi parmi le caoutchouc naturel, le polyisoprène, le polybutadiène, les copolymères butadiène-styrène, (SBR), ou butadiène-acrylonitrile (NBR).

19. Batterie selon la revendication 1, **caractérisé en ce qu'**un film protecteur non placé sur la face extérieure d'une électrode terminale est constitué par un matériau qui a une conduction électronique C1 proche de la conductivité électronique C2 du matériau d'électrode avec lequel il est en contact et très inférieure à la conductivité électronique C3 du collecteur de courant, les conductivités C1, C2 et C3 étant telles que 0,5≤C1/C2≤2, et C2≤C3/100.

20. Batterie selon la revendication 1, **caractérisée en ce que** le matériau qui constitue le film protecteur est un matériau polymère élastique qui comprend essentiellement au moins un polymère, un agent de conduction électronique et éventuellement une ou plusieurs charges.

21. Batterie selon la revendication précédente, **caractérisée en ce que** le polymère est un polymère de fluorovinylidène (PVDF), un copolymère de fluorovinylidène et d'hexafluoropropylène (PVDF-HFP), un copolymère styrène/butadiène (SBR), un polymère d'oxyde d'éthylène (POE), ou un mélange de ces polymères.

22. Batterie selon la revendication 20, **caractérisée en ce que** l'agent de conduction électronique est du noir de carbone, du noir d'acétylène, du graphite éventuellement sous forme expansée, du carbone sous forme de nanotubes.

23. Batterie selon la revendication 1, **caractérisée en ce que** le matériau formant le film protecteur est un matériau polymère élastique qui comprend essentiellement au moins un polymère non solvatant choisi parmi les polymères de fluorovinylidène (PVDF), les copolymères de fluorovinylidène et d'hexafluoropropylène (PVDF-HFP), les copolymères styrène/butadiène (SBR) et qui est exempt de sel de lithium.

24. Batterie selon l'une des revendications 3 ou 5, caractérisée en qu'un film de protection est placé entre le collecteur de courant et le film de matière active de l'électrode.

## Patentansprüche

1. Batterie, gebildet von einer elementaren PEN-Batterie, die einen Film eines Elektrolyts E, enthaltend ein Lithiumsalz zwischen einem Film P, der eine positive Elektrode bildet, und einem Film N, der eine negative Elektrode bildet, oder von einem Stapel elementarer PEN-Batterien, wobei der Stapel zwei terminale elementare Batterien umfasst, zwischen denen eventuell eine oder mehrere intermediäre elementare Batterien platziert sind, wobei die Batterie **dadurch gekennzeichnet ist, dass** sie wenigstens zwei Schutzfilme Fp umfasst, die von einem elastischen Material gebildet sind, wobei wenigstens eine der Elektroden der elementaren Batterie oder jede terminale Batterie mit einem Schutzfilm Fp im Kontakt ist, der von einem elastischen Material gebildet ist mit einer Reißfestigkeit aₘₑ und einer Stärke eₘₑ, wobei wenigstens einer der Schutzfilme Fp mit einer Verbindungsschicht einer Elektrode mit einer Stärke eₘₐₓ im Kontakt ist, wobei der Film eine Stärke eₘₑ hat, die derart ist, dass eₘₑ > eₘₐₓ/aₘₑ.

2. Batterie nach Anspruch 1 oder 2, **dadurch gekennzeichnet, dass** der Elektrolyt ein fester Elektrolyt ist.

3. Batterie nach Anspruch 1, **dadurch gekennzeichnet, dass** eine positive Elektrode von einem Stromabnehmer gebildet ist, der vor allem eine Verbindungsschicht bildet, die einen aktiven Materialfilm der positiven Elektrode trägt, der imstande ist, Lithiumionen reversibel zu integrieren.

4. Batterie nach einem der vorangehenden Ansprüche, **dadurch gekennzeichnet, dass** eine negative Elektrode von einem Film eines metallischen Materials gebildet ist, der vor allem eine Verbindungsschicht bildet, ausgewählt auf dem Lithium, den Lithiumlegierungen und den intermetallischen Lithiumverbindungen.

5. Batterie nach einem der Ansprüche 1 bis 3, **dadurch gekennzeichnet, dass** eine negative Elektrode von einem Stromabnehmer gebildet ist, der vor allem eine Verbindungsschicht bildet, die einen aktiven Materialfilm der negativen Elektrode trägt, der imstande ist, Lithiumionen reversibel zu integrieren.

6. Batterie nach einem der vorangehenden Ansprüche, **dadurch gekennzeichnet, dass** sie eine einzige elementare PEN-Batterie umfasst und dass wenigstens eine der Seiten jeder Elektrode mit dem Schutzfilm Fp im Kontakt ist.

7. Batterie nach einem der Ansprüche 1 bis 5, **dadurch gekennzeichnet, dass** sie Gruppen elementarer parallel verbundener Batterien umfasst, wobei die Gruppen parallel verbundener Batterien in Reihe verbunden sind.

8. Batterie nach einem der Ansprüche 1 bis 5, **dadurch gekennzeichnet, dass** sie vielfache elementare PEN-Batterien umfasst, die derart gestapelt sind, dass:
- die positiven Elektroden von zwei benachbarten elementaren Batterien in einer einzigen vereint und von einem einzigen Stromabnehmer gebildet sind, der einen aktiven Materialfilm der positiven Elektrode auf jeder seiner Seiten trägt,
- die negativen Elektroden von zwei benachbarten elementaren Batterien in einer einzigen vereint und entweder von einem einzigen Stromabnehmer, der einen aktiven Materialfilm der negativen Elektrode auf jeder seiner Seiten trägt, oder von einem Film eines metallischen Materials, ausgewählt aus dem Lithium, den Lithiumlegierungen und den intermetallischen Lithiumverbindungen, gebildet sind,
- eine positive terminale Elektrode von einem Stromabnehmer gebildet ist, der ein aktives Materials der positiven Elektrode auf einer seiner Seiten trägt,
- eine negative terminale Elektrode entweder von einem Stromabnehmer, der ein aktives Materials der negativen Elektrode auf einer seiner Seiten trägt, oder von einem Film eines metallischen Materials, ausgewählt aus dem Lithium, den Lithiumlegierungen und den intermetallischen Lithiumverbindungen, gebildet ist.

9. Batterie nach Anspruch 8, wobei die negativen Elektroden von einem Stromabnehmer gebildet sind, der ein aktives Material der negativen Elektrode trägt, **dadurch gekennzeichnet, dass**:
- sie einen Schutzfilm auf jeder Seite des Stromabnehmers jeder Elektrode mit einem bestimmten Vorzeichen umfasst,
- der Schutzfilm eine Stärke eₘₑ hat, die derart ist, dass eₘₑ ≥ eₘₐₓ/aₘₑ ist, wobei eₘₐₓ wenigstens gleich der Stärke eines Stromabnehmers ist,
- ein Schutzfilm auf der Seite vor den positiven Stromabnehmern und auf der Seite nach den negativen Stromabnehmern platziert ist, wobei "vor" und "nach" in Bezug zur Richtung des Eindringens eines spitzen leitenden Elements zu verstehen ist.

10. Batterie nach Anspruch 8, wobei die negativen Elektroden von einem Stromabnehmer gebildet sind, der ein aktives Material der negativen Elektrode trägt, **dadurch gekennzeichnet, dass** ein Schutzfilm auf wenigstens einer der Seiten des Stromabnehmers jeder terminalen Elektrode aufgebracht ist, wobei der Film eine Stärke eₘₑ hat, die derart ist, dass eₘₑ ≥ e_{max-Tot}/aₘₑ ist, wobei e_{max-Tot} wenigstens gleich der Stärke der Einheit der übereinandergelagerten elementaren Batterien ist.

11. Batterie nach Anspruch 8, wobei die negativen Elektroden von einem Stromabnehmer gebildet sind, der ein aktives Material der negativen Elektrode trägt, **dadurch gekennzeichnet, dass** ein Schutzfilm auf jeder Seite des Stromabnehmers jeder Elektrode mit einem bestimmten Vorzeichen aufgebracht ist, wobei der Film eine Stärke hat, die derart ist, dass eₘₑ ≥ e_{max-Tot}/aₘₑ ist, wobei e_{max-Tot} wenigstens gleich der Stärke einer elementaren Batterie ist.

12. Batterie nach Anspruch 8, wobei die negativen Elektroden von einem Stromabnehmer gebildet sind, der ein aktives Materials der negativen Elektrode trägt, **dadurch gekennzeichnet, dass** ein Schutzfilm auf die Seite vor den positiven Stromabnehmern und auf die Seite nach den negativen Stromabnehmern platziert ist, wobei "vor" und "nach" in Bezug zur Richtung des Eindringens eines spitzen leitenden Elements zu verstehen ist, wobei der Film eine Stärke eₘₑ hat, die derart ist, dass eₘₑ ≥ e_{max-Tot}/aₘₑ ist, wobei e_{maX-Tot} wenigstens gleich der Stärke einer elementaren Batterie ist.

13. Batterie nach Anspruch 8, wobei die negativen Elektroden von einem metallischen Materialfilm gebildet sind, **dadurch gekennzeichnet, dass** ein Schutzfilm auf jeder Seite des Stromabnehmers jeder positiven Elektrode platziert ist, wobei der Film eine Stärke eₘₑ hat, die derart ist, dass eₘₑ ≥ eₘₐₓ/aₘₑ ist, wobei eₘₐₓ wenigstens gleich der Stärke eines Stromabnehmers der positiven Elektrode ist.

14. Batterie nach Anspruch 8, wobei die negativen Elektroden von einem metallischen Materialfilm gebildet sind, **dadurch gekennzeichnet, dass** ein Schutzfilm auf jeder Seite jeder negativen Elektrode platziert ist, wobei der Film eine Stärke eₘₑ hat, die derart ist, dass eₘₑ ≥ eₘₐₓ/aₘₑ ist, wobei eₘₐₓ wenigstens gleich der Stärke der negativen Elektrode ist unter Berücksichtigung der Dehnung des Materials, das diese negative Elektrode bildet, oder der Stärke des Elektrolyts und der positiven Elektrode, platziert nach dem Schutzfilm.

15. Batterie nach Anspruch 8, wobei die negativen Elektroden von einem metallischen Materialfilm gebildet sind, **dadurch gekennzeichnet, dass** ein Schutzfilm auf der Seite vor den positiven Stromabnehmern und auf der Seite nach den negativen Elektroden platziert ist, wobei "vor" und "nach" in Bezug zur Richtung des Eindringens eines spitzen leitenden Elements zu verstehen ist, wobei der Film eine Stärke eₘₑ hat, die derart ist, dass eₘₑ ≥ eₘₐₓ/aₘₑ ist, wobei eₘₐₓ wenigstens gleich der größten Stärke von der Stärke eines Stromabnehmers und der Stärke der negativen Elektrode ist unter Berücksichtigung seiner Dehnung.

16. Batterie nach Anspruch 8, wobei die negativen Elektroden von einem metallischen Materialfilm gebildet sind und die terminalen Elektroden negative Elektroden sind, **dadurch gekennzeichnet, dass** ein Schutzfilm auf der Außenseite jeder terminalen Elektrode aufgebracht ist, wobei der Film eine Stärke eₘₑ hat, die derart ist, dass eₘₑ ≥ e_{max-Tot}/aₘₑ ist, wobei e_{max-Tot} wenigstens gleich der Stärke der Einheit der übereinandergelagerten elementaren Batterien ist, und ein Schutzfilm aufgebracht ist:
- entweder auf jede der Seiten der Stromabnehmer der positiven Elektroden, bei Auswahl eines Materials und einer Filmstärke, die derart sind, dass eₘₑ ≥ eₘₐₓ/aₘₑ ist, wobei eₘₐₓ wenigstens gleich der Stärke eines Stromabnehmers ist,
- oder auf jede der Seiten der intermediären negativen Elektroden, bei Auswahl eines Materials und einer Filmstärke, die derart sind, dass eₘₑ ≥ eₘₐₓ/aₘₑ ist, wobei eₘₐₓ wenigstens gleich der Stärke einer negativen Elektrode ist, unter Berücksichtigung der möglichen Dehnung des Materials der negativen Elektrode.

17. Batterie nach Anspruch 8, wobei die negativen Elektroden von einem metallischen Materialfilm gebildet sind und die terminalen Elektroden positive Elektroden sind, **dadurch gekennzeichnet, dass** ein Schutzfilm auf einer der Seiten des Stromabnehmers jeder terminalen Elektrode aufgebracht ist, wobei die Stärke eₘₑ des Films derart ist, dass eₘₑ ≥ e_{max-Tot}/aₘₑ ist, wobei e_{max-Tot} wenigstens gleich der Stärke der Einheit der übereinandergelagerten elementaren Batterien ist, und ein Schutzfilm aufgebracht ist:
- entweder auf jede der Seiten der Stromabnehmer der positiven Elektroden, bei Auswahl eines Materials und einer Filmstärke, die derart sind, dass eₘₑ ≥ eₘₐₓ/aₘₑ ist, wobei eₘₐₓ wenigstens gleich der Stärke eines Stromabnehmers ist,
- oder auf jede der Seiten der intermediären negativen Elektroden, bei Auswahl eines Materials und einer Filmstärke, die derart sind, dass eₘₑ ≥ eₘₐₓ/aₘₑ ist, wobei eₘₐₓ wenigstens gleich der Stärke einer negativen Elektrode ist, unter Berücksichtigung der möglichen Dehnung des Materials der negativen Elektrode.

18. Batterie nach Anspruch 1, **dadurch gekennzeichnet, dass** ein auf der Außenseite einer terminalen Elektrode aufgebrachter Schutzfilm von einem Elastomermaterial gebildet ist, das aus dem Naturkautschuk, dem Polyisopren, dem Polybutadien, den Butadien-Styrol- (SB) oder Butadiene-Acrylnitril- (NBR) - Copolymeren ausgewählt ist.

19. Batterie nach Anspruch 1, **dadurch gekennzeichnet, dass** ein nicht auf der Außenseite einer terminalen Elektrode platzierter Schutzfilm von einem Material gebildet ist, da seine elektronische Leitung C1 nahe der elektronischen Konduktivität C2 des Elektrodenmaterials hat, mit dem es im Kontakt ist, und weit unter der elektronischen Konduktivität C3 des Stromabnehmers, wobei die Konduktivitäten C1, C2 und C3 derart sind, dass 0,5 ≤ C1/C2 ≤ 2 und C2 ≤ C3/100 sind.

20. Batterie nach Anspruch 1, **dadurch gekennzeichnet, dass** das Material, das den Schutzfilm bildet, ein elastisches Polymermaterial ist, das im Wesentlichen wenigstens ein Polymer, ein elektronisches Leitungsmittel und eventuell eine oder mehrere Chargen umfasst.

21. Batterie nach vorangehendem Anspruch, **dadurch gekennzeichnet, dass** das Polymer ein Fluorvinylidenpolymer (PVDF), ein Fluorvinyliden- und Hexafluorpropylen-Copolymer (PVDF-HFP), ein Styrol/Butadien-Copolymer (SBR), ein Ehylenoxydpolymer(POE) oder ein Gemisch dieser Polymere ist.

22. Batterie nach Anspruch 20, **dadurch gekennzeichnet, dass** das elektronische Leitungsmittel Karbonschwarz, Acetylenschwarz, Graphit eventuell in expandierter Form, Karbon in Form von Nanoröhrchen ist.

23. Batterie nach Anspruch 1, **dadurch gekennzeichnet, dass** das Material, das den Schutzfilm bildet, ein elastisches Polymermaterial ist, das im Wesentlichen wenigstens ein nicht solvatisierendes Polymer umfasst, das aus den Fluorvinylidenpolymeren (PVDF), den Fluorvinyliden- und Hexafluorpropylen-Copolymeren (PVDF-HFP), den copolymeres Styrol/Butadien-Copolymeren (SBR) ausgewählt sind und das kein Lithiumsalz enthält.

24. Batterie nach einem der Ansprüche 3 oder 5, **dadurch gekennzeichnet, dass** ein Schutzfilm zwischen dem Stromabnehmer und dem aktiven Materialfilm der Elektrode platziert ist.

## Claims

1. A battery formed with an elementary battery PEN which comprises a film of an electrolyte E containing a lithium salt between a film P forming a positive electrode and a film N forming a negative electrode, or with a stack of elementary batteries PEN, said stack comprising two terminal elementary batteries between which are optionally placed one or several intermediate elementary batteries, said battery being **characterized in that** it comprises at least two protective films Fp formed with an elastic material, at least one of the electrodes of the elementary battery or of each terminal battery being in contact with a protective film Fp formed with an elastic material having an elongation at break designated by aₘₑ and a thickness designated by eₘₑ, at least one of said protective films Fp being in contact with a connecting layer of an electrode having a thickness eₘₐₓ, said film having a thickness eₘₑ such that eₘₑ > eₘₐₓ/aₘₑ.

2. The battery according to claim 1 or 2, **characterized in that** the electrolyte is a solid electrolyte.

3. The battery according to claim 1, **characterized in that** a positive electrode is formed with a current collector, notably forming a connecting layer, bearing a film of positive electrode active material capable of inserting lithium ions reversibly.

4. The battery according to any of the preceding claims, **characterized in that** a negative electrode is formed with a film of a metal material, notably forming a connecting layer, selected from among lithium, lithium alloys and lithium intermetallic compounds.

5. The battery according to any of claims 1 to 3, **characterized in that** a negative electrode is formed with a current collector, notably forming a connecting layer bearing a film of negative electrode active material capable of inserting lithium ions reversibly.

6. The battery according to any of the preceding claims, **characterized in that** it comprises a single elementary battery PEN and that at least one of the faces of each electrode is in contact with said protective film Fp.

7. The battery according to any of claims 1 to 5, **characterized in that** it comprises groups of elementary batteries assembled in parallel, said assembled groups of batteries in parallel being assembled in series.

8. The battery according to any of claims 1 to 5, **characterized in that** it comprises multiple elementary batteries PEN, which are stacked in such a way that:
- the positive electrodes of two adjacent elementary batteries are gathered together in a single one and formed with a single current collector bearing a positive electrode active material film on each of its faces;
- the negative electrodes of two adjacent elementary batteries are gathered in a single one and formed either with a single current collector bearing a negative electrode active material film on each of its faces; or with a film of a metal material selected from lithium, lithium alloys and lithium intermetallic compounds;
- a positive terminal electrode is formed with a current collector bearing a positive electrode active material on one of its faces;
- a negative terminal electrode is formed either with a current collector bearing a negative electrode active material on one of its faces, or with a film of a metal material selected from lithium, lithium alloys and lithium intermetallic compounds.

9. The battery according to claim 8, wherein the negative electrodes are formed with a current collector bearing a negative electrode active material, **characterized in that**:
- it comprises a protective film on each face of the current collector of each electrode of a given sign,
- said protective film has a thickness eₘₑ such that eₘₑ ≥ eₘₐₓ/aₘₑ, eₘₐₓ being at least equal to the thickness of a current collector,
- a protective film is placed on the face upstream from the positive current collectors, and on the face downstream from the negative current collectors, "upstream" and "downstream" being understood with respect to the penetration direction of a conductive pointed element.

10. The battery according to claim 8, wherein the negative electrodes are formed with a current collector bearing a negative electrode active material, **characterized in that** a protective film is affixed on at least one of the faces of the current collector of each terminal electrode,
said film having a thickness eₘₑ such that eₘₑ ≥ e_{max-Tot} /aₘₑ, e_{max-Tot} being at least equal to the thickness of the set of superposed elementary batteries.

11. The battery according to claim 8, wherein the negative electrodes are formed with a current collector bearing a negative electrode active material, **characterized in that** a protective film is affixed on each face of the current collector of each electrode of a given sign, said film having a thickness such that eₘₑ ≥ e_{max-Tot} /aₘₑ, e_{max-Tot} being at least equal to the thickness of an elementary battery.

12. The battery according to claim 8, wherein the negative electrodes are formed with a current collector bearing a negative electrode active material, **characterized in that** a protective film is placed on the face upstream from the positive current collectors, and on the face downstream from the negative current collectors, "upstream" and "downstream" being understood with respect to the penetration direction of a conductive pointed element, said film having a thickness eₘₑ such that eₘₑ≥ e_{max-Tot} /aₘₑ, e_{max-Tot} being at least equal to the thickness of an elementary battery.

13. The battery according to claim 8, wherein the negative electrodes are formed with a film of metal material, **characterized in that** a protective film is placed on each face of the current collector of each positive electrode, said film having a thickness eₘₑ such that eₘₑ ≥ eₘₐₓ/aₘₑ, eₘₐₓ being at least equal to the thickness of a current collector of the positive electrode.

14. The battery according to claim 8, wherein the negative electrodes are formed with a film of metal material, **characterized in that** a protective film is placed on each face of each negative electrode, said film having a thickness eₘₑ, such that eₘₑ ≥ eₘₐₓ/aₘₑ, eₘₐₓ being at least equal to the thickness of the negative electrode by taking into account the stretching of the material forming this negative electrode, or to the thickness of the electrolyte and of the positive electrode placed after the protective film.

15. The battery according to claim 8, wherein the negative electrodes are formed with a film of metal material, **characterized in that** a protective film is placed on the face upstream from the positive current collectors, and on the face downstream from the negative electrodes, "upstream" and "downstream" being understood with respect to the penetration direction of a conductive pointed elements, said film having a thickness eₘₑ such that eₘₑ ≥ eₘₐₓ/aₘₑ, eₘₐₓ being at least equal to the greatest thickness from among the thickness of a current collector and the thickness of the negative electrode by taking into account its stretching.

16. The battery according to claim 8, wherein the negative electrodes are formed with a film of metal material, and the terminal electrodes are negative electrodes, **characterized in that** a protective film is affixed on the outer face of each terminal electrode, said film having a thickness eₘₑ such that eₘₑ ≥ e_{max-Tot} /aₘₑ, e_{max-Tot} being at least equal to the thickness of the set of superposed elementary batteries, and a protective film is affixed:
- either on each of the faces of the current collectors of the positive electrodes, by selecting a material and a film thickness such that eₘₑ ≥ eₘₐₓ/aₘₑ, eₘₐₓ being at least equal to the thickness of a current collector;
- or on each of the faces of the intermediate negative electrodes, by selecting a material and a film thickness such that eₘₑ ≥ eₘₐₓ/aₘₑ, eₘₐₓ being at least equal to the thickness of a negative electrode, by taking into account the possible stretching of the negative electrode material.

17. The battery according to claim 8, wherein the negative electrodes are formed with a film of metal material, and the terminal electrodes are positive electrodes, **characterized in that** a protective film is affixed on one of the faces of the current collector of each terminal electrode, the thickness eₘₑ of said film being such that eₘₑ ≥ e_{max-Tot} /aₘₑ, e_{max-Tot} being at least equal to the thickness of the set of the superposed elementary batteries, and a protective film is affixed:
- either on each of the faces of the current collectors of the positive electrodes, by selecting a material and a film thickness such that eₘₑ ≥ eₘₐₓ/aₘₑ, eₘₐₓ being at least equal to the thickness of a current collector;
- or on each of the faces of the intermediate negative electrodes, by selecting a material and a film thickness such that eₘₑ ≥ eₘₐₓ/aₘₑ, eₘₐₓ being at least equal to the thickness of a negative electrode, by taking into account the possible stretching of the negative electrode material.

18. The battery according to claim 1, **characterized in that** a protective film placed on the outer face of a terminal electrode is formed with an elastomeric material selected from natural rubber, polyisoprene, polybutadiene, butadiene-styrene copolymers (SBR) or butadiene-acrylonitrile (NBR) copolymers.

19. The battery according to claim 1, **characterized in that** a protective film not placed on the outer face of a terminal electrode is formed with a material which has an electron conduction C1 close to the electron conductivity C2 of the electrode material with which it is in contact and much less than the electron conductivity C3 of the current collector, the conductivity C1, C2 and C3 being such that 0.5 ≤ C1/C2 ≤ 2, and C2 ≤ C3/100.

20. The battery according to claim 1, **characterized in that** the material which forms the protective film is an elastic polymeric material which essentially comprises at least one polymer, an electron conduction agent and optionally one or several fillers.

21. The battery according to the preceding claim, **characterized in that** the polymer is a polymer of fluorovinylidene (PVDF), a copolymer of fluorovinylidene and hexafluoropropylene (PVDF-HFP), a styrene/butadiene (SBR) copolymer, a polymer of ethylene oxide (POE) or a mixture of these polymers.

22. The battery according to claim 20, **characterized in that** the electron conduction agent is carbon black, acetylene black, graphite optionally in an expansed form, carbon in the form of nano tubes.

23. The battery according to claim 1, **characterized in that** the material forming the protective film is an elastic polymeric material which essentially comprises at least one non-solvating polymer selected from polymers of fluorovinylidene (PVDF), copolymers of fluorovinylidene and hexafluoropropylene (PVDF-HFP), styrene/butadiene (SBR) copolymers and which is without any lithium salt.

24. The battery according to one of claims 3 or 5, **characterized in that** a protective film is placed between the current collector and the film of active material of the electrode.
